# EUROPÄISCHE PATENTSCHRIFT

(11) **EP 0 995 076 B1**
(45) Veröffentlichungstag und Bekanntmachung des Hinweises auf die Patenterteilung: **02.10.2002**
(21) Anmeldenummer: 98943639.9
(22) Anmeldetag: 07.07.1998
(51) Int. Cl.: G01B 11/06, D21F 7/06

(54) **VERFAHREN UND VORRICHTUNG ZUR ERMITTLUNG DER DICKE VON PAPIER ODER PAPPE DURCH MESSUNG AN EINER LAUFENDEN MATERIALBAHN**
METHOD AND DEVICE FOR DETERMINING THE THICKNESS OF PAPER OR CARDBOARD BY MEASURING ON A CONTINUOUS MATERIAL WEB
PROCEDE ET DISPOSITIF POUR LA DETERMINATION DE L'EPAISSEUR DE PAPIER OU DE CARTON PAR MESURE SUR UNE BANDE DE MATERIAU CONTINUE

(30) Priorität: 07.07.1997 DE 19729004
(43) Veröffentlichungstag der Anmeldung: 26.04.2000
(73) Patentinhaber: SIEMENS AKTIENGESELLSCHAFT, 80333 München (DE)
(72) Erfinder: HARTENSTEIN, Hermann, D-91077 Neunkirchen (DE); LAMPE, Uwe, D-21614 Buxtehude (DE); ROTH, Christoph, D-81739 München (DE)
(86) Internationale Anmeldenummer: DE9801872
(87) Internationale Veröffentlichungsnummer: WO99002941

(56) Entgegenhaltungen:
- US-A- 3 258 594
- US-A- 4 748 329
- US-A- 4 885 709
- US-A- 5 389 789

## Beschreibung

Die Erfindung bezieht sich auf ein Verfahren zur Ermittlung der Dicke von Papier oder Pappe durch Messung an einer laufenden Materialbahn, wobei optische Methoden berührungslos eingesetzt werden. Daneben bezieht sich die Erfindung auch auf zugehörige Vorrichtungen zur Durchführung des Verfahrens.

In der Praxis der Papierindustrie wird bisher die Papierdicke bei laufender Papierbahn berührend durch Anpressen auf das Papier und traversierend über die gesamte Breite der Papierbahn gemessen. Nichttraversierende Messungen über die gesamte Materialbahnbreite, die bei Papierfabriken bis zu 10 m betragen kann, werden bisher nicht eingesetzt.

Berührungslose Messungen, die optische Prinzipien ausnutzen, wie Lasermessungen oder Spektroskopie, werden zwar auch zur Papierdickenmessung vorgeschlagen, können aber in der Praxis bei schnellaufenden Papierbahnen nicht mit Erfolg eingesetzt werden.

Aus der US-A-4 885 709 sind Verfahren und zugehörige Vorrichtungen bekannt, mit denen optisch und berührungslos Eigenschaften von flächenhaften Gegenständen, d.h. unter anderem auch die Dicke, gemessen werden sollen. Dabei wird jeweils mit wenigstens drei diskreten Wellenlängen gearbeitet, das Transmissions- oder das Reflexionsvermögen des Gegenstandes erfaßt und durch Korrelation mit bekannten Eigenschaftswerten von bekannten Gegenständen der geforderte Eigenschaftswert bestimmt.

Aufgabe der Erfindung ist es demgegenüber, ein anderes optisches Verfahren zur Messung der Dicke von Papier oder Pappe bei einer schnellaufenden Materialbahn anzugeben und die zugehörigen Vorrichtungen zu schaffen.

Die Aufgabe ist bezüglich des Verfahrens erfindungsgemäß durch die Abfolge der Verfahrenschritte gemäß Patentanspruch 1 gelöst. Vorteilhafte Weiterbildungen sind in den abhängigen Ansprüchen angegeben. Zugehörige Vorrichtungen sind in den Vorrichtungsansprüchen gekennzeichnet.

Bei der Erfindung wird als elektromagnetische Strahlung vorzugsweise der Infrarotbereich verwendet, von diesem vorzugsweise der Bereich des nahen Infrarot (NIR: 0,8 - 2,5 µm) und des mittleren Infrarot (MIR: 2,5 - 10 µm). Wesentlich ist dabei, daß in diesen Spektralbereichen kontinuierliche Spektren erfaßt und ausgewertet werden.

Speziell mit Hilfe der Infrarot-Spektroskopie kann also insbesondere berührungslos und online eine Messung zur Bestimmung der Papierdicke an einer in der Papiermaschine mit hoher Geschwindigkeit laufenden Papierbahn durchgeführt werden. Es wurde erkannt, daß aus der Absorption der Spektren durch die Zellulosebestandteile von Papier oder Pappe eine genaue Dickenbestimmung möglich ist. Die Messung der Absorption kann vorzugsweise durch eine lineare Anordnung von mehreren Sensoren als Array quer zur Papierbahn erfolgen. Ein Traversieren über die Papierbahn hinweg ist dann nicht notwendig.

Die Absorption von elektromagnetischer Strahlung hängt nach dem Lambert-Beerschen Gesetz von der Schichtdicke der absorbierenden Substanz ab. Es kann daher in Transmission durch das Papier die Absorption von elektromagnetischen Strahlung gemessen werden. Aus den Meßwerten der Absorption wird dann die Papierdicke bestimmt.

Da die Zusammensetzung von Papier oder Pappe unabhängig von der Papierdicke von Sorte zu Sorte variiert, hat sie Einfluß auf die Absorption von Infrarotlicht, die sich dadurch bei konstanter Papierdicke verändern kann. Um solche Effekte zu erfassen, ist es erforderlich, den Einfluß der Papierzusammensetzung auf die Absorption zu bestimmen. Dazu wird ebenfalls mit kontinuierlichen Spektren im angegebenen Spektralbereich gemessen.

Die Auswertung speziell des kontinuierlichen Spektrums zur Bestimmung der Dicke der laufenden Materialbahn erfolgt insbesondere mit Hilfe von chemometrischen Methoden, z.B. PCA (Partial Component Analysis) und/oder PLS (Partial Least Square). Alternativ ist auch die Auswertung über Neuronale Netze möglich. In beiden Fällen ist es vorteilhaft, für das Meß- und Auswertesystem Trainings-Sets von Papieren mit bekannten Eigenschaften einzusetzen. Es lassen sich so geeignete Modelle erstellen.

Wie bereits erwähnt, hängt die Absorption in Papier oder Pappe wesentlich von der Zusammensetzung des Papiers oder der Pappe ab, weshalb je nach der bekannten Rohstoffzusammensetzung, wie Zellstoffe, Altpapier, Füllstoffe, unterschiedliche Trainings-Sets angelegt werden, in denen die bekannten Zusammenhänge zwischen Absorption und Zusammensetzung sowie Materialdicke berücksichtigt sind. Da während der Papier- oder Pappeherstellung während der Herstellung einer Sorte üblicherweise keine Änderung der Rohstoffzusammensetzung erfolgt, ist der Wechsel von einem zu dem anderen Trainings-Set nur dann bei einem Sortenwechsel erforderlich, wenn damit eine Änderung der Rohstoffzusammensetzung verbunden ist.

Neben der Auswertung der kontinuierlichen Spektren können zur Berechnung der Papierdicke auch weitere Meßdaten des Papiers bzw. Pappe oder auch von der Papiermaschine einbezogen werden. Insbesondere können die Porosität oder die Formation des Papiers, die direkt optisch meßbar sind, berücksichtigt werden. Es ist auch möglich, Materialgrößen indirekt über eine Kombination von signifikanten Maschinenparametern, wie z.B. Vakuumdruck, Geschwindigkeiten, Pressendruck, Dampfverbrauch, bei der Produktion zu berechnen.

Eine Traversierung wird vorteilhafterweise dadurch überflüssig, daß quer zur Papierbahn ein lineares Array von Infrarotsensoren an einen Meßrahmen angebracht wird, so daß eine simultane Messung der Querprofiles des Papiers ermöglicht wird. Die Zahl der erforderlichen Meßpunkte wird dabei von der Zahl der auf der Papiermaschine vorhandenen Stellglieder, beispielsweise am Stoffauflauf, vorgegeben. Durch synchronisiertes Auslenken des Meßrahmens mit dem Sensorarray läßt sich die Zahl der Meßpunkte erhöhen.

Weitere Einzelheiten und Vorteile der Erfindung ergeben sich aus der nachfolgenden Figurenbeschreibung von Ausführungsbeispielen anhand der Zeichnung, bei der speziell auf die Papierherstellung eingegangen wird, wobei für Pappe entsprechendes gilt. Es zeigen jeweils in grobschematischer Darstellung
- Figur 1: ein Online-Spektrometer an einer Papierbahn für ein sequentielle Messung in Querrichtung dere Papierbahn,
- Figur 2: eine Modifikation von Fig.1 mit einer Lichtquellenzeile
- Figur 3: ein Online-Spektrometer für eine simultane Messung in Querrichtung der Papierbahn und
- Figur 4: ein Online-Spektrometer, das in diffuser Reflexion gegen eine spiegelnde Walze mißt.

Das erfindungsgemäße Verfahren ergibt sich aus der gemeinsamen Beschreibung der einzelnen Figuren. In den Figuren haben jeweils gleiche Teile gleiche Bezugszeichen.

Der prinzipielle Aufbau eines Online-Spektrometers für die Messung in Querrichtung an einer mit hoher Geschwindigkeit laufenden Papierbahn besteht aus:
- einer oder mehreren Lichtquellen
- einzelnen Glasfasern von der Lichtquelle zur Papierbahn, womit eine parallele Ausleuchtung der Papierbahn erreicht wird
- Meßeinrichtungen für die Absorption/Transmission als Response-Signale nach Wechselwirkung des Lichtes mit der laufenden Papierbahn
- einen Rechner (PC) mit geeigneter Software zur Steuerung des Meßgerätes, zur Signalaufnahme und Signalauswertung.

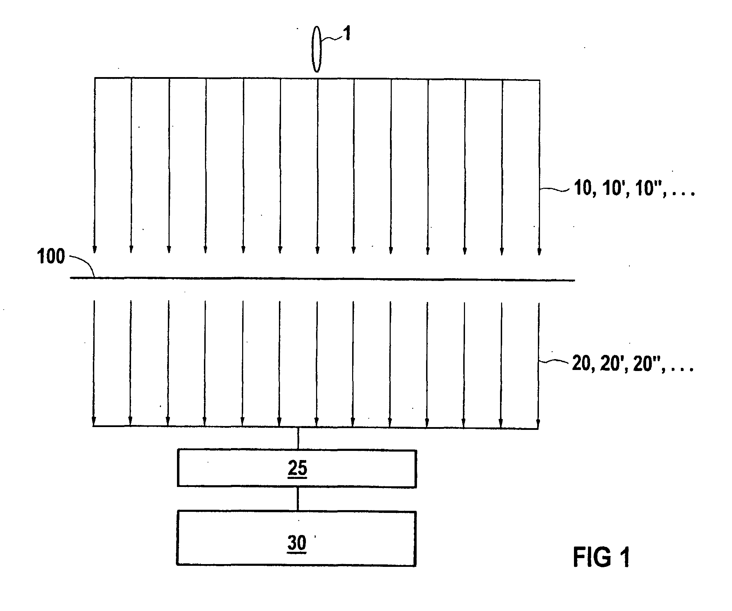

In Figur 1 ist an geeigneter Position oberhalb einer Papierbahn 100 eine Lichtquelle 1 angebracht. Das Licht wird z.B. mittels Glasfasern 10, 10, ... zur Papierbahn hingeführt, so daß sich eine gleichmäßige Ausleuchtung in Lateralrichtung der laufenden Papierbahn ergibt. Die Zahl der anzuschließenden Glasfasern 10, 10', ... richtet sich dabei nach Zahl der quer zur Papierbahn zu realisierenden Meßpunkte. Vorteilhafterweise sollte im optischen Bereich des NIR (nahes Infrarot: 0,8 - 2,5 µm) gemessen werden, da für diesen Spektralbereich preiswerte Glasfasern in ausreichender Länge und Qualität verfügbar sind sowie eine Messung in Transmission auch durch relative dickes Papier möglich ist.

Das Licht tritt durch die Papierbahn 100 hindurch. Die Messung der verbleibenden Lichtintensität und damit der Absorption kann auf zwei alternativen Wegen erfolgen:
- Sequentielle Messung über die Papierbahn hinweg unter Verwendung eines optischen Multiplexers
- Simultane Messung über die Papierbahn hinweg mit einem Array von Spektrometern in Mikrosystemtechnik

Bei einer sequentielle Messung über die Papierbahn 100 hinweg werden die Meßpunkte quer zur Papierbahn 100 nacheinander gemessen. Die laterale örtliche Auflösung hängt dabei nur von der Zahl der realisierten Meßpunkte ab, die Auflösung in Längsrichtung von der Meßgeschwindigkeit des Spektrometers und der Zahl der Meßpunkte. Entsprechend Figur 1 besteht eine solches Spektrometer aus einer hinreichenden Anzahl von Glasfasern 20, 20', ... entsprechend der zu realisierenden Meßpunkte, einem Multiplexer 25, einem nicht im einzelnen dargestellten Monochromator und einem Detektor 30. Bedingt durch den Einsatz der Glasfasern können letztere Komponenten räumlich getrennt von der Papierbahn 100 betrieben werden, so daß sie insbesondere nicht der hohen Temperatur der im Produktionsprozeß schnell laufenden Papierbahn ausgesetzt sind.

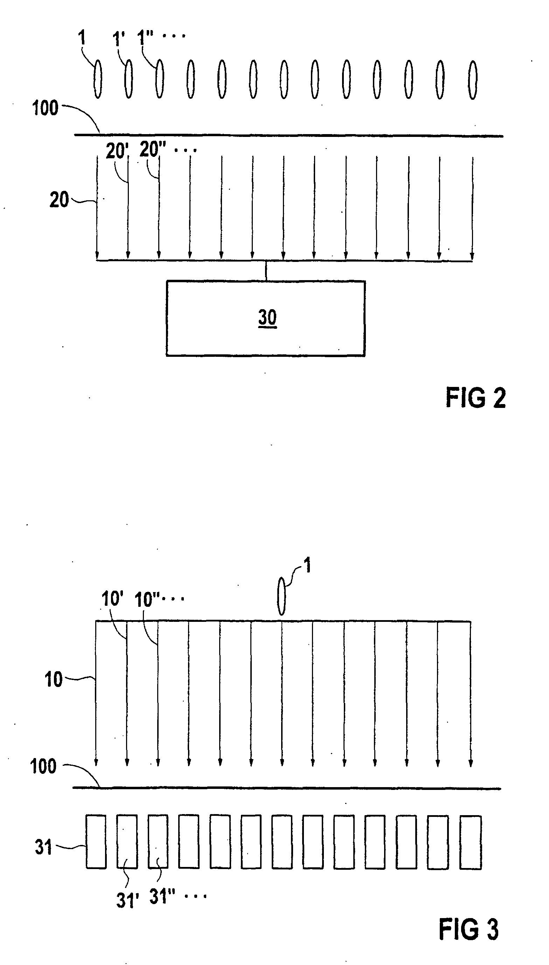

Als Alternative zum optischen Multiplexen ist in Figur 2 der Ausbau einer Zeile von Lichtquellen entsprechend der Anzahl der Meßpunkte dargestellt. Die Lichtquellen 1, 1', ... werden nacheinander entsprechend der gewünschten Meßfrequenz einund ausgeschaltet. Es wird dann nur jeweils der Meßpunkt beleuchtet, von dem das Spektrum aufgenommen werden soll. Damit erspart man sich das aufwendige optische Multiplexen, da die Schaltung der Lichtquellen rein elektronisch vorgenommen werden kann.

Zur Auswertung ist ein Monochromator notwendig. Dafür sind grundsätzlich zwei Realisierungen möglich, und zwar
- optische Gitter
- sog. AOTF's (Acoustical-Optical-Tunable-Filter)

Optische Gitter stellen eine konventionelle Lösung dar. Will man mechanisch bewegte Gitter vermeiden, u.a. da man mit ihnen keine kurzen Meßzeiten im Bereich von wenigen ms realisieren kann, benötigt man für diesen Typ Monochromator ein Detektorarray. Der AOTF wirkt dagegen unmittelbar als Monochromator, so daß nur das Licht mit der gewünschten Wellenlänge zum Kristall gelangt.

Der AOTF ist ein Material, dessen Brechungsindex sichtbares Licht oder Infrarot-Licht durch Anlegen einer akustischen Schwingung eingestellt werden kann, so daß nur Licht der gewünschten Wellenlänge durch den Monochromator zum Detektor gelangen kann.

Da ein Driften der einzelnen Komponenten des Spektrometers, insbesondere die Lichtquelle und die Detektoren, nicht auszuschließen ist, muß die Möglichkeit einer Referenzmessung vorgesehen werden. Im einfachsten Fall wird dafür eine Glasfaser direkt von der Lichtquelle zum Detektor gezogen. Eine zusätzlich Maßnahmen ist eine geeignete mathematische Vorbehandlung der kontinuierlichen Spektren.

Der Detektor muß zur Verbesserung der Signalstabilität gekühlt werden, wozu ein Peltierelement ausreicht. Für die Ansteuerung des Spektrometers und die Auswertung der Meßergebnisse wird ein Industrie - PC benötigt. Das Spektrometer einschließlich PC kann am Einsatzort beispielsweise in einem temperierten Container untergebracht werden.

Bei einer simultanen Messung über die Papierbahn wird quer zur Papierbahn ein Array in Miniaturspektrometern in Mikrosystemtechnik (MST) aufgebaut. Der wesentliche Vorteil eines solchen System liegt darin, daß die Messung an der Papierbahn nahezu in Echtzeit erfolgen kann. Damit ist ein Maximum an örtlicher Auflösung, lateral wie in Längsrichtung erreichbar.

Mit einer Anordnung gemäß Figur 3 kann vor allem an schnell laufenden Papiermaschinen die Messung deutlich verbessert werden. Das Mikrospektrometer enthält prinzipiell die gleichen Komponenten wie Figur 1, jedoch entfällt der Multiplexer 20.

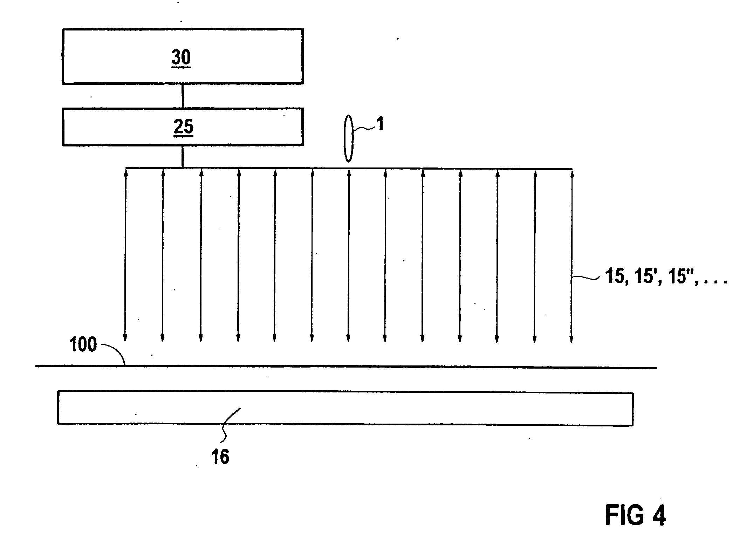

In Figur 4 mißt eine Meßanordnung entsprechend Figur 3, bei der Lichtleiterfasern 15, 15', ... als Sende-/Empfangslichtleiter arbeiten, in diffuser Reflexion gegen eine spiegelnde Walze 16 hinter der Papierbahn 100. Das Spektrometer enthält prinzipiell die gleichen Komponenten wie in Figur 1 mit optischem Multiplexer 25 und Detektor 30. Ein Aufbau entsprechend Figur 2 oder Figur 3 ist ebenfalls möglich.

Zur Ermittlung der kontinuierlichen Spektren wird das Infrarot-Spektrum des Papiers insbesondere im Bereich des NIR gemessen oder, falls erforderlich, auch im Bereich des MIR. Die gemessenen Spektren werden anschließend vorverarbeitet, wozu geeignete Software zur Verfügung steht. Dazu gehören u.a.
- Glätten der Spektren
- Nullinienkorrektur
- Normierung
- Bildung von Mittelwerten
- Identifikation von Ausreißern, d.h. Störungen, die beispielsweise durch Messungen an ausgedehnten Schmutzpunkten entstehen
- Bildung von Ableitungen bzw. Integralen
- Identifikation von Peaks hinsichtlich ihrer Intensität, Peakbreite bzw. Flächenintegral.

Es folgt die eigentliche Auswertung: Mit an sich bekannten chemometrischen Methoden zur Auswertung von Spektren, wie insbesondere der sogenannten Hauptkomponentenanalyse (PCA ≙ Partial Component Analysis) oder der Methode der kleinsten Quadrate (PLS ≙ Partial Least Square), lassen sich kontinuierliche Spektren rechnergestützt bearbeiten. Dabei wird zur Ermittlung von geeigneten Kenngrößen entsprechend der älteren Anmeldung WO-A- 98 28 490 vorgegangen, wobei dort zur Prozeßführung und Prozeßoptimierung bei der Papierherstellung kontinuierliche Spektren ausgewertet und insbesondere Zustandsund/oder Prozeßmodelle abgeleitet werden. Nunmehr wird über eine geeignete Modellierung und Erstellung von Trainings-Sets speziell die Bestimmung der Dicke von Papier oder Pappe ermöglicht und zwar unter praxisgerechten Bedingungen der Papierfabrik bei mit hoher Geschwindigkeit laufender Materialbahn.

Außer den angegebenen chemometrischen Methoden können auch Neuronale Netze zum Einsatz kommen. Für die Modellbildung bezüglich der Papiereigenschaften sind in beiden Fällen geeignete Trainings-Sets notwendig, so daß dem Rechner die notwendigen Daten geliefert werden. Aus den Daten wird mit geeigneter Software die Papierdicke berechnet.

## Patentansprüche

1. Verfahren zur Ermittlung der Dicke von Papier oder Pappe durch Messung an einer laufenden Materialbahn, wobei für die Messung optische Methoden berührungslos eingesetzt werden, mit folgenden Merkmalen:
- Die Messung erfolgt mit kontinuierlichen optischen Spektren, vorzugsweise im Infrarot (IR)-Bereich,
- dazu wird Licht mit einem vorgegebenen Spektralbereich gleichmäßig in Lateralrichtung zur laufenden Materialbahn eingestrahlt,
- Nach Wechselwirkung des Lichtes mit der laufenden Materialbahn werden kontinuierliche Spektren als Response-Signale mit chemometrischen Methoden und/oder Neuronalen Netzen ausgewertet und daraus die Dicke der Materialbahn bestimmt.

2. Verfahren nach Anspruch 1, wobei für die Auswertung mit den chemometrischen Methoden und/oder den Neuronalen Netzen Trainings-Sets verwendet werden.

3. Verfahren nach Anspruch 1, wobei die Trainings-Sets unterschiedliche Rohstoffzusammensetzungen des Materials, insbesondere die Art der Zellstoffe, Altpapier, Füllstoffe bei Papierbahnen, berücksichtigt.

4. Verfahren nach Anspruch 3, wobei in den Trainings-Sets die empirischen Zusammenhänge zwischen Absorption und Zusammensetzung des Materials sowie der Dicke der Papierbahn abgelegt sind.

5. Verfahren nach Anspruch 1, wobei die laufende Materialbahn die Papierbahn in einer Papiermaschine ist, und zur Bestimmung der Dicke der Papierbahn an der Papiermaschine erfaßte Meßdaten einbezogen werden, beispielsweise Eigenschaften wie die Porosität, die Formation und andere Eigenschaften, die optisch meßbar sind.

6. Verfahren nach Anspruch 5, wobei auch Parameter der Papiermaschine selbst, beispielsweise Vakuumdruck, Geschwindigkeit, Pressendruck, Dampfverbrauch od. dgl., berücksichtigt werden.

7. Verfahren nach einem der vorhergehenden Ansprüche, wobei mit einem linearen Array von Infrarotsensoren in Querrichtung zur Richtung der laufenden Materialbahn gemessen wird.

8. Verfahren nach Anspruch 7, wobei für die Messung an laufenden Papierbahnen die Zahl der Meßpunkte von der Zahl der auf der Papiermaschine vorhandenen Stellglieder, insbesondere am Stoffauflauf, bestimmt wird.

9. Verfahren nach Anspruch 7, wobei das Array während der Messung in Lateralrichtung verschoben wird, um die Zahl der Meßpunkte pro Sensor zu erhöhen.

10. Vorrichtung zur berührungslosen, optischen Ermittlung der Dicke einer laufenden Materialbahn aus Papier oder Pappe gemäß dem Verfahrens nach einem der Ansprüche 1 bis 9, **gekennzeichnet durch** ein Spektrometer (1) mit wenigstens einer Lichtquelle, **durch** Mittel (10, 10', ...) zur Übertragung des Lichtes zur Materialbahn (100), um eine Ausleuchtung in Lateralrichtung zur laufenden Materialbahn zu gewährleisten, und **durch** Einrichtungen (30, 31, 31', ...) zur Messung der Lichtintensität nach Transmission **durch** die Materialbahn (100) und zur Auswertung der kontinuierlichen Spektren.

11. Vorrichtung nach Anspruch 10, **dadurch gekennzeichnet, daß** die Mittel zur Lichtübertragung (10, 10',..., 20, 20',...) Glasfasern sind.

12. Vorrichtung nach Anspruch 10, **dadurch gekennzeichnet, daß** die Einrichtung zur Messung der Lichtintensität einen optischen Multiplexer (25) für eine sequentielle Messung über die Materialbahn (100) enthält.

13. Vorrichtung nach Anspruch 10, **dadurch gekennzeichnet, daß** die Einrichtung zur Messung der Lichtintensität ein Detektorarray (31, 32, ...) für eine simultane Messung über die Papierbahn (100) hinweg enthält, das an einem Meßrahmen angebracht ist.

14. Vorrichtung nach Anspruch 13, **dadurch gekennzeichnet, daß** das Detektorarray (31, 32) aus Einzelspektrometern in Mikrosystemtechnik (MST) besteht.

15. Vorrichtung nach Anspruch 10, **gekennzeichnet durch** geeignete Software zur Steuerung der Messung und der Signalaufnahme und zur Signalauswertung mittels eines Rechners.

16. Vorrichtung nach Anspruch 15, **dadurch gekennzeichnet, daß** vom Rechner zur Signalauswertung folgende Maßnahmen einzeln oder kombiniert ausführbar sind:
- Glätten der Spektren
- Nullinienkorrektur
- Normierung
- Bildung von Mittelwerten
- Identifikation von Ausreißern, d.h. Störungen, die beispielsweise durch Messung an ausgedienten Schmutzpunkten od. dgl. entstehen
- Bildung von Ableitungen bzw. Integralen
- Identifikation von Peaks hinsichtlich ihrer Intensität, Peakbreite bzw. Flächenintegral
- Berechnung der Hauptkomponenten, wie PCA oder PLS.

17. Vorrichtung nach Anspruch 15, **dadurch gekennzeichnet, daß** die Auswertung im Rechner mit neuronalen Netzen erfolgt.

## Claims

1. Method for determining the thickness of paper or cardboard by measurement on a continuous material web, non-contacting optical methods being used for the measurement, having the following features:
- the measurement is carried out with continuous optical spectra, preferably in the infrared (IR) range,
- for this purpose, light with a predefined spectral range is radiated uniformly in the lateral direction towards the continuous material web,
- after the light has interacted with the continuous material web, continuous spectra are evaluated as response signals by chemometric methods and/or neural networks, and the thickness of the material web is determined from these.

2. Method according to Claim 1, training sets being used for the evaluation by the chemometric methods and/or the neural networks.

3. Method according to Claim 1, the training sets taking into account different raw material compositions of the material, in particular the type of pulps, waste paper, fillers in paper webs.

4. Method according to Claim 3, the empirical relationships between absorption and composition of the material and the thickness of the paper web being stored in the training sets.

5. Method according to Claim 1, the continuous material web being the paper web in a papermaking machine, and, in order to determine the thickness of the paper web, measurement data registered on the papermaking machine being included, for example properties such as the porosity, the formation and other properties which can be measured optically.

6. Method according to Claim 5, parameters of the papermaking machine itself, for example vacuum, speed, press pressure, steam consumption or the like, also being taken into account.

7. Method according to one of the preceding claims, measurements being carried out in the direction transverse to the direction of the continuous material web, using a linear array of infrared sensors.

8. Method according to Claim 7, for the measurement on continuous paper webs, the number of measurement points being determined by the number of actuators on the papermaking machine, in particular on the headbox.

9. Method according to Claim 7, during the measurement, the array being shifted in the lateral direction in order to increase the number of measurement points per sensor.

10. Apparatus for non-contacting, optical determination of the thickness of a continuous material web of paper or cardboard according to the method according to one of Claims 1 to 9, **characterized by** a spectrometer (1) having at least one light source, by means (10, 10', ...) for transmitting the light towards the material web (100), in order to ensure illumination in the lateral direction with respect to the continuous material web, and by devices (30, 31 , 31', ...) for measuring the light intensity after transmission through the material web (100) and for evaluating the continuous spectra.

11. Apparatus according to Claim 10, **characterized in that** the means for transmitting the light (10, 10', ..., 20 , 20', ...) are glass fibres.

12. Apparatus according to Claim 10, **characterized in that** the device for measuring the light intensity contains an optical multiplexer (25) for a sequential measurement across the material web (100).

13. Apparatus according to Claim 10, **characterized in that** the device for measuring the light intensity contains a detector array (31, 32, ...) for a simultaneous measurement across the paper web (100), said array being mounted on a measuring frame.

14. Apparatus according to Claim 13, **characterized in that** the detector array (31, 32) comprises individual spectrometers using microsystem technology (MST).

15. Apparatus according to Claim 10, **characterized by** suitable software for controlling the measurement and recording signals and for signal evaluation by means of a computer.

16. Apparatus according to Claim 15, **characterized in that** the computer for signal evaluation can carry out the following measures, individually or in combination:
- smoothing the spectra
- zero-line correction
- normalization
- averaging
- identifying outliers, that is to say disturbances which are produced, for example, by measurement on extended dirt spots or the like
- forming derivatives or integrals
- identifying peaks with regard to their intensity, peak width and area integral
- calculating the principal components, such as PCA or PLS

17. Apparatus according to Claim 15, **characterized in that** the evaluation in the computer is carried out by neural networks.

## Revendications

1. Procédé pour déterminer l'épaisseur de papier ou de carton par mesure sur une bande de matériau avançant, des méthodes optiques sans contact étant utilisées pour la mesure, avec les caractéristiques suivantes :
- la mesure s'effectue avec des spectres optiques continus, de préférence dans le domaine infrarouge (IR),
- à cet effet, de la lumière ayant un domaine spectral prédéterminé est envoyée uniformément dans la direction latérale vers la bande de matériau avançant,
- après interaction de la lumière avec la bande de matériau avançant, on évalue des spectres continus comme signaux de réponse par des méthodes chimio-métriques et/ou par des réseaux neuronaux et on détermine à partir de là l'épaisseur de la bande de matériau.

2. Procédé selon la revendication 1, dans lequel on utilise des ensembles d'apprentissage pour l'évaluation par des méthodes chimio-métriques et/ou par des réseaux neuronaux.

3. Procédé selon la revendication 1, dans lequel les ensembles d'apprentissage prennent en compte des compositions différentes en matières brutes du matériau, notamment le type de la cellulose, des vieux papiers, des matières de charge pour des bandes de papier.

4. Procédé selon la revendication 3, dans lequel les relations empiriques entre l'absorption et la composition du matériau ainsi que l'épaisseur de la bande de papier sont enregistrées dans les ensembles d'apprentissage.

5. Procédé selon la revendication 1, dans lequel la bande de matériau avançant est la bande de papier dans une machine à papier et dans lequel, pour déterminer l'épaisseur de la bande de papier, on inclut des données de mesure détectées sur la machine à papier, par exemple des propriétés comme la porosité, l'épair et d'autres propriétés qui sont mesurables optiquement.

6. Procédé selon la revendication 5, dans lequel on prend aussi en compte des paramètres de la machine à papier elle-même, par exemple la dépression, la vitesse, la pression d'application, la consommation de vapeur ou d'autres paramètres analogues.

7. Procédé selon l'une des revendications précédentes, dans lequel on effectue la mesure avec un groupe linéaire de capteurs infrarouges dans la direction transversale par rapport à la direction de la bande de matériau avançant.

8. Procédé selon la revendication 7, dans lequel, pour la mesure sur des bandes de matériau avançant, on détermine le nombre des points de mesure en fonction du nombre des organes de réglage présents sur la machine à papier, notamment au niveau de la caisse de tête.

9. Procédé selon la revendication 7, dans lequel, pendant la mesure, on déplace le groupe dans la direction latérale pour augmenter le nombre des points de mesure par capteur.

10. Dispositif pour la détermination optique sans contact de l'épaisseur d'une bande de matériau avançant, en papier ou en carton, selon le procédé selon l'une des revendications 1 à 9, **caractérisé par** un spectromètre (1) avec au moins une source lumineuse, par des moyens (10, 10', ...) pour la transmission de la lumière vers la bande de matériau (100) afin de garantir un éclairage dans la direction latérale par rapport à la bande de matériau avançant et par des dispositifs (30, 31, 31', ...) pour la mesure de l'intensité lumineuse après transmission à travers la bande de matériau (100) et pour l'évaluation des spectres continus.

11. Dispositif selon la revendication 10, **caractérisé par le fait que** les moyens pour la transmission de la lumière (10, 10', ..., 20, 20', ...) sont des fibres de verre.

12. Dispositif selon la revendication 10, **caractérisé par le fait que** le dispositif pour la mesure de l'intensité lumineuse contient un multiplexeur optique (25) pour une mesure séquentielle sur la bande de matériau (100).

13. Dispositif selon la revendication 10, **caractérisé par le fait que** le dispositif pour la mesure de l'intensité lumineuse contient un groupe de détecteurs (31, 32, ...) qui est destiné à une mesure simultanée sur toute la bande de papier (100) et qui est disposé sur un cadre de mesure.

14. Dispositif selon la revendication 13, **caractérisé par le fait que** le groupe de détecteurs (31, 32) est constitué de spectromètres individuels selon la technique des microsystèmes (MST).

15. Dispositif selon la revendication 10, **caractérisé par** un logiciel approprié pour la commande de la mesure et de la réception de signaux et pour l'évaluation de signaux au moyen d'un ordinateur.

16. Dispositif selon la revendication 15, **caractérisé par le fait que** les dispositions suivantes peuvent être mises en oeuvre individuellement ou en combinaison par l'ordinateur pour l'évaluation de signaux :
- lissage des spectres,
- correction de la ligne du zéro,
- normalisation,
- formation de valeurs moyennes,
- identification de points aberrants, c'est-à-dire de défauts, qui sont dus par exemple à des mesures en des points sales étendus,
- formation de dérivées ou d'intégrales,
- identification de pics du point de vue de leur intensité, de la largeur de pic ou de l'intégrale de surface,
- calcul des composantes principales, par exemple PCA ou PLS.

17. Dispositif selon la revendication 15, **caractérisé par le fait que** l'évaluation s'effectue dans l'ordinateur avec des réseaux neuronaux.
